(19) Europäisches Patentamt

European Patent Office

Office européen des brevets

(11) **EP 1 519 836 B1**

(12) **EUROPEAN PATENT SPECIFICATION**

(45) Date of publication and mention
of the grant of the patent:
**13.09.2006 Bulletin 2006/37**

(51) Int Cl.:
*B32B 27/34* (2006.01)    *B32B 27/32* (2006.01)
*C08G 69/02* (2006.01)    *C08G 69/26* (2006.01)

(21) Application number: **03762922.7**

(22) Date of filing: **04.07.2003**

(86) International application number:
**PCT/NL2003/000495**

(87) International publication number:
**WO 2004/005026 (15.01.2004 Gazette 2004/03)**

(54) **PROCESS FOR APPLYING A LAYER OF BRANCHED POLYAMIDE TO A SUBSTRATE**

VERFAHREN ZUM AUFBRINGEN EINER SCHICHT AUS VERZWEIGTEM POLYAMID AUF EIN SUBSTRAT

PROCEDE POUR APPLIQUER UNE COUCHE DE POLYAMIDE RAMIFIE SUR UN SUBSTRAT

(84) Designated Contracting States:
**AT BE BG CH CY CZ DE DK EE ES FI FR GB GR HU IE IT LI LU MC NL PT RO SE SI SK TR**

(30) Priority: **09.07.2002 NL 1021031**

(43) Date of publication of application:
**06.04.2005 Bulletin 2005/14**

(73) Proprietor: **DSM IP Assets B.V.**
**6411 TE Heerlen (NL)**

(72) Inventors:
• **KROON DE, Jan**
**NL-6093 JH Heythuysen (NL)**

• **BRINK, Ted**
**NL-6211 XR Maastricht (NL)**

(74) Representative: **Krijgsman, Willem**
**DSM Intellectual Property**
**Office Geleen**
**P.O. Box 9**
**6160 MA Geleen (NL)**

(56) References cited:
EP-A- 0 000 363          WO-A-00/35992
WO-A-02/12371            WO-A-99/03909
DE-A- 19 859 929         US-B1- 6 355 358
US-B1- 6 541 599

**Description**

The invention relates to a process for manufacturing a laminate, which at least comprises applying a layer of polyamide to a substrate.

Such a method is known, for example, from WO 01/40055. In this document a paperboard substrate is coated by means of extrusion coating with, seen from the paperboard to the outside, a nylon layer, a tie layer and a polyethylene layer.

A disadvantage of the known method resides in the fact that at high production speeds the film-shaped extrudate tends to become unstable so that the substrate is unevenly coated in terms of thickness. This instability is expressed in the fact that the still molten extrudate does not remain flat but starts to exhibit irregular wave patterns so that local differences in thickness are formed. As a rule the amplitude of the waves is greatest at the edges of the substrate, a certain width of which must therefore usually be cut off after the coating as being unusable. If several layers are extruded at the same time, this effect occurs to an even greater extent.

The aim of the invention is to provide a process with which substrates can at a high speed be coated with at least a layer of polyamide.

This aim is achieved according to the invention in that as polyamide mainly branched polyamide is used that is at least composed of units derived from:

a. AB monomers, which are understood to mean a monomer that has both a carboxylic acid group (A) and an amine group (B),
b. at least one compound I, being a carboxylic acid ($A_v$) with functionality $v \geq 2$ or an amine ($B_w$) with functionality $w \geq 2$,
c. at least one compound II, being a carboxylic acid ($A_v$) with functionality $v \geq 3$ or an amine ($B_w$) with functionality $w \geq 3$, with compound II being a carboxylic acid if compound I is an amine or with compound II being an amine if compound I is a carboxylic acid, wherein the quantities of units, derived from all the carboxylic acids and amines in the polyamide, satisfy formula 1

$$P < 1 / [(F_A - 1).(F_B - 1)] \qquad (1)$$

in which:

$$P = [\Sigma(n_i.f_i)]_X / [\Sigma(n_i.f_i)]_Y \qquad (2)$$

in which $P \leq 1$ and either X = A and Y = B, or X = B and Y = A and

$$F = \Sigma (n_i.f_i^2) / \Sigma (n_i.f_i) \qquad (3)$$

for respectively all carboxylic acids ($F_A$) and amines ($F_B$),), wherein $f_i$ is the functionality of a carboxylic acid ($v_i$) or amine ($w_i$), $n_i$ is the number of moles of a carboxylic acid or amine and the summation is carried out over all units derived from carboxylic acids and amines in the polyamide.

The specified branched polyamdies are known from WO-00/35992 and the definitions given there for the various components in the above formula apply here also. In particular compound I and compound II are also understood to be mixtures of several carboxylic acids having the same functionality or mixtures of several amines having the same functionality.

This choice of material appears to result in a significantly more stable extrudate, which means that it remains practically flat, even at high production speeds and even when several layers are applied to the substrate simultaneously. As a result, production speeds that are up to 50% higher can be achieved.

This choice further gives polyamide layers with a highly uniform external appearance without the irregularities caused by gels. Very suitable for application in the process according to the invention is branched polyamide in which caprolactam is the most frequently occurring monomeric unit.

A further advantage of the process according to the invention is the reduction that can be achieved in the edge waste in the form of cut-off parts of the polyamide layer or in the form of substrate coated with a polyamide layer of varying thickness. As a result, less starting material is necessary to manufacture the same surface area of laminated substrate and less material needs to be recycled or destroyed.

Laminates as meant here consist of a generally flat, solid substrate, for example of paper, paperboard, metal foil or sheet or plastic film. The layer of polyamide is applied to the substrate as a functional layer that gives the laminate the properties of the polyamide. In the case of paper or paperboard this is in particular the provision of a barrier to air, oxygen and aromatic substances. To reduce the permeability to moisture as well, at least a layer of high-density or low-density polyethylene is as a rule applied over the polyamide layer and optionally also other functional layers. It is also possible to apply functional layers to the side of the substrate that faces away from the polyamide layer. Suitable combinations of layers of different materials are known per se for the various intended applications of the obtained laminate. Such substrates that are coated with several layers are widely applied in packagings for foodstuffs, for example in the form of cartons or metal cans for milk or fruit juices. In these, the polyamide layer preferably borders directly on the substrate, which if desired can be provided with a layer of metal foil. Between the successive functional layers that give certain properties to the laminate, tie layers can be applied. If a polyethylene layer is applied over the branched polyamide layer, suitable materials for a tie layer are for example modified polyolefins such as LDPE, LLDPE, metallocene PE, polyethylene vinyl alcohol, polyethylene acrylic acid, polyethylene methacrylic acid and polypropylene, which are grafted with at least a compound chosen from the group consisting of $\alpha,\beta$-unsaturated dicarboxylic acids, for example maleic acid, fumaric acid and itaconic acid and anhydrides, acid esters, imides and imines thereof. It is also possible to use copolymers of ethylene and the said dicarboxylic acids, modified in the indicated manner, as a tie layer.

If the layers are immediately bordering on each other, that is without a separate tie layer, the layer of the polymer bordering on the polyamide layer preferably consists of a mixture of said polymer and a material described in the above as suitable for use as a tie layer, in the case of polyethylene the above-mentioned modified polyolefins, to promote the adhesion between the successive layers. It is also possible for both or one of the successive layers to be modified so as to improve the mutual adhesion.

The layer or layers are applied to the substrate by means of techniques that are known and suitable for this, in particular by extrusion coating. Extrusion coating is a technique known per se for applying film-shaped layers of molten plastic, for example polyamide, polyethylene, polypropylene, ethylene vinyl alcohol and thermoplastics, to solid substrates such as paper, paperboard, metal foil and plastic film. The substrate may in itself also consist of several layers, which have for example been applied to each other in one or more previous process steps. It is also possible to apply several layers, for example the polyamide layer and a tie layer for a next layer to be applied later, simultaneously to the substrate by coextrusion of these layers.

The thickness of the layers can be chosen in accordance with the desired effect. Polyamide layers with increasing thickness, for example, form a better barrier to oxygen and aromatic substances. In practice, the thickness can be between 1 and 100 grams per square metre. Very suitable is a thickness between 5 and 50 grams per square metre. The preceding also applies to any other functional layers, it being noted that a tie layer can generally be thinner than the layers which are tied to each other by the tie layer. In packaging applications the said polyethylene layer is often used to seal the packaging by means of heat sealing and the layer thickness required for this is a more determining factor than the requirement set by the moisture barrier properties.

The polyamide applied consists mainly of branched polyamide, which is understood to mean that in addition to the branched polyamide a quantity of non-branched polyamide may also be present. This quantity should be limited in such a way that the beneficial effects of the application of the branched polyamide are not lost to an unacceptable degree. Preferably at least 50% of the polyamide in the polyamide layer is branched polyamide, and more preferably at least 75% and even at least 90%. The beneficial effect of the presence of the branched polyamide is most manifest when all the polyamide in the layer is branched polyamide. Mixtures of different branched polyamides can also be applied as branched polyamide.

The polyamide may further contain the usual additives, for example nucleating agents, lubricants, antistatics, anti-blocking agents, colourants and stabilizers. This holds equally for the other layers optionally applied.

The invention further relates to a laminate comprising a substrate and a layer consisting mainly of a branched polyamide as defined hereinbefore, the use of this laminate for manufacturing food stuff packages and food stuff packages, comprising this laminate.

**Claims**

1.  Process for manufacturing a laminate, which at least comprises the application of a layer of polyamide to a substrate, **characterized in that** as polyamide mainly branched polyamide is used that is at least composed of units derived from:

    a. AB monomers, which are understood to mean a monomer that has both a carboxylic acid group (A) and an amine group (B),
b. at least one compound I, being a carboxylic acid ($A_v$) with functionality $v \geq 2$ or an amine ($B_w$) with functionality $w \geq 2$,
c. at least one compound II, being a carboxylic acid ($A_v$) with functionality $v \geq 3$ or an amine ($B_w$) with functionality $w \geq 3$, with compound II being a carboxylic acid if compound I is an amine or with compound II being an amine if compound I is a carboxylic acid, wherein the quantities of units, derived from all the carboxylic acids and amines in the polyamide, satisfy formula 1

$$P < 1 / [(F_A - 1).(F_B - 1)] \qquad (1)$$

in which:

$$P = [\Sigma(n_i.f_i)]_X / [\Sigma(n_i.f_i)]_Y \qquad (2)$$

in which $P \leq 1$ and either X = A and Y = B, or X = B and Y = A and

$$F = \Sigma (n_i.f_i^2) / \Sigma (n_i.f_i) \qquad (3)$$

for respectively all carboxylic acids ($F_A$) and amines ($F_B$),), wherein $f_i$ is the functionality of a carboxylic acid ($v_i$) or amine ($w_i$), $n_i$ is the number of moles of a carboxylic acid or amine and the summation is carried out over all units derived from carboxylic acids and amines in the polyamide.

2. Process according to claim 1, in which the layer of polyamide is applied by extrusion coating.

3. Process according to claim 1 or 2, in which the substrate, is a metal or is paper or paperboard, optionally coated with a layer of a metal foil.

4. Laminate comprising a substrate and a layer consisting mainly of a branched polyamide that is at least composed of units derived from:

a. AB monomers, which are understood to mean a monomer that has both a carboxylic acid group (A) and an amine group (B),
b. at least one compound I, being a carboxylic acid ($A_v$) with functionality $v \geq 2$ or an amine ($B_w$) with functionality $w \geq 2$,
c. at least one compound II, being a carboxylic acid ($A_v$) with functionality $v \geq 3$ or an amine ($B_w$) with functionality $w \geq 3$, with compound II being a carboxylic acid if compound I is an amine or with compound II being an amine if compound I is a carboxylic acid, wherein the quantities of units, derived from all the carboxylic acids and amines in the polyamide, satisfy formula 1

$$P < 1 / [(F_A - 1).(F_B - 1)] \qquad (1)$$

in which:

$$P = [\Sigma(n_i.f_i)]_X / [\Sigma(n_i.f_i)]_Y \qquad (2)$$

in which $P \leq 1$ and either X = A and Y = B, or X = B and Y = A and

$$F = \Sigma\, (n_i.f_i^2)\ /\ \Sigma\, (n_i.f_i) \qquad (3)$$

for respectively all carboxylic acids ($F_A$) and amines ($F_B$),), wherein $f_i$ is the functionality of a carboxylic acid ($v_i$) or amine ($w_i$), $n_i$ is the number of moles of a carboxylic acid or amine and the summation is carried out over all units derived from carboxylic acids and amines in the polyamide.

5. Use of the laminate according to claim 4 for manufacturing a packaging for foodstuffs.

6. Packaging for foodstuffs, comprising the laminate according to claim 4.

**Patentansprüche**

1. Verfahren für die Herstellung eines Laminats, umfassend mindestens die Aufbringung einer Schicht aus Polyamid auf ein Substrat, **dadurch gekennzeichnet, dass** als Polyamid hauptsächlich verzweigtes Polyamid verwendet wird, das mindestens aus Einheiten aufgebaut ist, abgeleitet von:

   a. AB-Monomeren, die als ein Monomer zu verstehen sind, welches sowohl eine Carbonsäuregruppe (A) als auch eine Amingruppe (B) aufweist;
   b. mindestens einer Verbindung I, welche eine Carbonsäure ($A_v$) mit einer Funktionalität $v \geq 2$ oder ein Amin ($B_w$) mit einer Funktionalität $w \geq 2$ ist;
   c. mindestens einer Verbindung II, welche eine Carbonsäure ($A_v$) mit einer Funktionalität $v \geq 3$ oder ein Amin ($B_w$) mit einer Funktionalität $w \geq 3$ ist, wobei die Verbindung (II) eine Carbonsäure ist, wenn die Verbindung I ein Amin ist, oder wobei die Verbindung II ein Amin ist, wenn die Verbindung I eine Carbonsäure ist, wobei die von all den Carbonsäuren und Aminen in dem Polyamid abgeleiteten Mengeneinheiten der Formel 1 genügen:

$$P\ <\ 1\ /\ [(F_A - 1).(F_B - 1)] \qquad (1)$$

worin:

$$P\ =\ [\Sigma(n_i.f_i)]_x\ /\ [\Sigma(n_i.f_i)]_y \qquad (2)$$

worin $P \leq 1$ und entweder X = A und Y = B oder X = B und Y = A und

$$F\ =\ \Sigma(n_i.f_i^2)\ /\ \Sigma(n_i.f_i) \qquad (3)$$

für jeweils alle Carbonsäuren ($F_A$) bzw. Amine ($F_B$), wobei $f_i$ die Funktionalität einer Carbonsäure ($v_i$) oder eines Amins ($w_i$) ist, $n_i$ die Molzahl einer Carbonsäure oder eines Amins ist und die Summierung über alle von Carbonsäuren und Aminen in dem Polyamid abgeleiteten Einheiten durchgeführt wird.

2. Verfahren nach Anspruch 1, wobei die Schicht aus Polyamid durch Extrusionsbeschichtung aufgebracht wird.

3. Verfahren nach Anspruch 1 oder 2, wobei das Substrat ein Metall ist oder Papier oder Pappe ist, gegebenenfalls beschichtet mit einer Schicht aus einer Metallfolie.

4. Laminat, umfassend ein Substrat und eine Schicht, bestehend hauptsächlich aus einem verzweigten Polyamid, das zumindest aufgebaut ist aus Einheiten, abgeleitet von:

a. AB-Monomeren, die als ein Monomer zu verstehen sind, welches sowohl eine Carbonsäuregruppe (A) als auch eine Amingruppe (B) aufweist;

b. mindestens einer Verbindung I, welche eine Carbonsäure ($A_v$) mit einer Funktionalität $v \geq 2$ oder ein Amin ($B_w$) mit einer Funktionalität $w \geq 2$ ist;

c. mindestens einer Verbindung II, welche eine Carbonsäure ($A_v$) mit einer Funktionalität $v \geq 3$ oder ein Amin ($B_w$) mit einer Funktionalität $w \geq 3$ ist, wobei die Verbindung II eine Carbonsäure ist, wenn die Verbindung I ein Amin ist, oder wobei die Verbindung II ein Amin ist, wenn die Verbindung I eine Carbonsäure ist, wobei die von all den Carbonsäuren und Aminen in dem Polyamid abgeleiteten Mengeneinheiten der Formel 1 genügen:

$$P < 1 \; / \; [(F_A - 1).(F_B - 1)] \qquad (1)$$

worin:

$$P = [\sum(n_i.f_i)]_x \; / \; [\sum(n_i.f_i)]_y \qquad (2)$$

worin $P \leq 1$ und entweder X = A und Y = B oder X = B und Y = A und

$$F = \sum(n_i.f_i^2) \; / \; \sum(n_i.f_i) \qquad (3)$$

für jeweils alle Carbonsäuren ($F_A$) bzw. Amine ($F_B$), wobei $f_i$ die Funktionalität einer Carbonsäure ($v_i$) oder eines Amins ($w_i$) ist, $n_i$ die Molzahl einer Carbonsäure oder eines Amins ist und die Summierung über alle von Carbonsäuren und Aminen in dem Polyamid abgeleiteten Einheiten durchgeführt wird.

**5.** Verwendung des Laminats nach Anspruch 4 für die Herstellung einer Verpackung für Nahrungsmittel.

**6.** Verpackung für Nahrungsmittel, umfassend das Laminat nach Anspruch 4.

**Revendications**

**1.** Procédé de fabrication d'un stratifié, qui comporte au moins l'application d'une couche de polyamide sur un substrat, **caractérisé en ce que**, comme polyamide, un polyamide principalement ramifié est utilisé qui est constitué au moins de motifs dérivés de :

a. monomères AB, à savoir un monomère qui possède à la fois un groupe acide carboxylique (A) et un groupe amine (B),

b. au moins un composé I, qui est un acide carboxylique ($A_v$) ayant une fonctionnalité v égale ou supérieure à 2 ou une amine ($B_w$) ayant une fonctionnalité w égale ou supérieure à 2,

c. au moins un composé II, qui est un acide carboxylique ($A_v$) ayant une fonctionnalité v égale ou supérieure à 3 ou une amine ($B_w$) ayant une fonctionnalité w égale ou supérieure à 3, le composé II étant un acide carboxylique si le composé I est une amine, ou le composé II étant une amine si le composé I est un acide carboxylique, où les quantités de motifs, dérivés de tous les acides carboxyliques et de toutes les amines dans le polyamide, satisfont la formule 1

$$P < 1 \; / \; [(F_A - 1).(F_B - 1)] \qquad (1)$$

dans laquelle :

$$P = [\sum(n_i.f_i)]_x / [\sum(n_i.f_i)]_y \qquad (2)$$

dans laquelle P est égal ou inférieur à 1 et soit X = A et Y = B, ou X = B et Y = A, et

$$F = \sum(n_i.f_i^2) / \sum(n_i.f_i) \qquad (3)$$

pour respectivement tous les acides carboxyliques ($F_A$) et toutes les amines ($F_B$), où $f_i$ est la fonctionnalité d'un acide carboxylique ($v_i$) ou d'une amine ($w_i$), $n_i$ est le nombre de moles d'un acide carboxylique ou d'une amine et la somme est exécutée sur tous les motifs dérivés des acides carboxyliques et des amines dans le polyamide.

2. Procédé selon la revendication 1, dans lequel la couche de polyamide est appliquée par revêtement par extrusion.

3. Procédé selon la revendication 1 ou 2, dans lequel le substrat est un métal ou est un papier ou un carton, éventuellement recouvert d'une couche d'une feuille métallique.

4. Stratifié comprenant un substrat et une couche constituée principalement d'un polyamide ramifié qui est constitué au moins de motifs dérivés de :

   a. monomères AB, à savoir un monomère qui possède à la fois un groupe acide carboxylique (A) et un groupe amine (B),
   b. au moins un composé I, qui est un acide carboxylique ($A_v$) ayant une fonctionnalité v égale ou supérieure à 2 ou une amine ($B_w$) ayant une fonctionnalité w égale ou supérieure à 2,
   c. au moins un composé II, qui est un acide carboxylique ($A_v$) ayant une fonctionnalité égale ou supérieure à 3 ou une amine ($B_w$) ayant une fonctionnalité égale ou supérieure à 3, le composé II étant un acide carboxylique si le composé I est une amine, ou le composé II étant une amine si le composé I est un acide carboxylique, où les quantités de motifs, dérivés de tous les acides carboxyliques et de toutes les amines dans le polyamide, satisfont la formule 1

$$P < 1 / [(F_A - 1).(F_B - 1)] \qquad (1)$$

dans laquelle :

$$P = [\sum(n_i.f_i)]_x / [\sum(n_i.f_i)]_y \qquad (2)$$

dans laquelle P est égal ou inférieur à 1 et soit X = A et Y = B, ou X = B et Y = A, et

$$F = \sum(n_i.f_i^2) / \sum(n_i.f_i) \qquad (3)$$

pour respectivement tous les acides carboxyliques ($F_A$) et toutes les amines ($F_B$), où $f_i$ est la fonctionnalité d'un acide carboxylique ($v_i$) ou d'une amine ($w_i$), $n_i$ est le nombre de moles d'un acide carboxylique ou d'une amine et l'addition est exécuté sur tous les motifs dérivés des acides carboxyliques et des amines dans le polyamide.

5. Utilisation du stratifié selon la revendication 4 pour la fabrication d'un emballage pour produits alimentaires.

6. Emballage pour produits alimentaires, comprenant le stratifié selon la revendication 4.